# EUROPÄISCHE PATENTSCHRIFT

(11) **EP 2 697 572 B1**
(45) Veröffentlichungstag und Bekanntmachung des Hinweises auf die Patenterteilung: **22.05.2019**
(21) Anmeldenummer: 12713862.6
(22) Anmeldetag: 11.04.2012
(51) Int. Cl.: F24F 11/00, F24F 13/14, F16K 1/22

(54) **AUTOMATISIERTE FUNKTIONSDIAGNOSE**
AUTOMATIC FUNCTION DIAGNOSIS SYSTEM AND METHOD
SYSTEME ET METHODE DE DIAGNOSTIQUE AUTOMATIQUE DE FONCTION

(30) Priorität: 14.04.2011 CH 662112011
(43) Veröffentlichungstag der Anmeldung: 19.02.2014
(73) Patentinhaber: Belimo Holding AG, 8340 Hinwil (CH)
(72) Erfinder: SCHMIDLIN, Peter, CH-8610 Uster (CH); LEHNERT, Frank, CH-8630 Rüti (CH)
(74) Vertreter: Keller & Partner Patentanwälte AG
(86) Internationale Anmeldenummer: PCT/CH2012/000084
(87) Internationale Veröffentlichungsnummer: WO 2012/139236

(56) Entgegenhaltungen:
- WO-A1-2006/131991
- WO-A1-2009/109056
- DE-A1- 4 424 652
- US-A1- 2002 095 986
- US-A1- 2004 186 599
- US-A1- 2005 274 417
- US-B1- 6 198 243

## Beschreibung

### Technisches Gebiet

Die Erfindung betrifft ein Verfahren und ein Fluidstromventil zur automatisierten Funktionskontrolle einer HLK Anlage (HLK: Heizung, Lüftung, Klima).

### Stand der Technik

Es bestehen Vorschriften, wonach der Betreiber einer HLK Anlage (HLK: Heizung, Lüftung und Klima) deren Funktionsweise regelmässig überprüfen muss. Dies ist insbesondere für Sicherheitskomponenten wie Brandschutzklappen wichtig. Dazu muss ein Inspektor z. B. alle 6 Monate vor Ort unter anderem das Schliessen von Klappen der HLK Anlage überprüfen und/oder bei laufenden Systemventilatoren Parameter der Volumenströme kontrollieren. Aus solchen Tests kann sich ergeben, ob Klappen ordnungsgemäss funktionieren, eingebaute Filter ausgewechselt werden müssen oder im System Lecks bestehen. Ein Inspektor kann mit diesen Tests auch bei der Inbetriebnahme einer HLK Anlage überprüfen, ob z. B. Antriebe und Klappen ordnungsgemäss montiert und miteinander verbunden sind und Lüftungskanäle dicht sind.

Durch die Tests einer HLK Anlage können zudem sicherheitsrelevante Komponenten auf deren Funktionstüchtigkeit überprüft werden, also beispielsweise Brandschutzklappen, welche in einem Brandfall ihre Funktion zuverlässig erfüllen müssen. Die Tests können aber auch Hinweise ergeben, damit die HLK Anlage optimal betrieben werden kann, so dass z. B. eine defekte Klappe repariert oder ersetzt werden kann, um je nach Fall Betriebskosten einzusparen oder den Raumkomfort zu verbessern.

Regelventile für Lüftungssysteme sind in verschiedensten Ausführungsvarianten bekannt. Beispiele für moderne Systeme sind z.B. aus der WO 2005/053975 (Belimo) und in der WO 2009/109056 (Belimo) ersichtlich. Auch motorisch betriebene Brandschutzklappen sind im Handel erhältlich.

Aus anderen technischen Anwendungen ist es bekannt, dass der Funktionszustand eines Geräts während des Betriebs automatisch bzw. laufend ermittelt werden kann.

Beispielsweise zeigt die WO 2005/059669 die Messung eines statischen Drucks in einem HLK System, um den Zustand eines Filters des HLK Systems abzuschätzen. Es kann erwartet werden, dass der Druck zunimmt, sobald das Filter verstopft ist. Die Änderungen des Drucks werden periodisch überprüft und auf einer Anzeige wird dem Benutzer der Zustand des Filters indikativ angezeigt sowie das Auswechseln vorgeschlagen, falls ein vorgebbarer Zustand erreicht ist.

Aus der US 6,107,923 ist die Detektion des Zustands eines Filters in einem Ventilationssystem eines Fahrzeugs bekannt. In einem bestimmten Betriebszustand wird ein Parameter eines Luftstroms bestimmt, welcher in den Fahrgastraum geleitet wird. Der Parameter wird mit einem Referenzwert verglichen und es wird bestimmt, ob das Filter zu ersetzen ist. Als Parameter können ein Druck, ein Volumen oder eine Geschwindigkeit bestimmt werden.

### US 6,334,959

Die US 6,334,959 befasst sich mit der Messung der Restlebenszeit eines Filters. Eine mit Partikel beladene Flüssigkeit wird durch das Filter geführt und am Filter wird ein Druckunterschied gemessen. Die Messung wird digitalisiert und mit abgespeicherten Werten verglichen, um die Restlebenszeit des Filters anzuzeigen. Die abgespeicherten Werte können aus Testmessungen bestimmt werden.

Die Überprüfung von HLK Anlagen ist aufwendig, da vor Ort durch einen oder mehrere Inspektoren verschiedene Tests durchgeführt werden müssen, um die Funktionstüchtigkeit der Anlage zu überprüfen. Dadurch fallen zum Teil erhebliche Kosten an. Es wird deshalb versucht, die Häufigkeit der Tests so klein wie möglich zu halten, z. B. entsprechend gesetzlichen Vorschriften oder gemäss einem Kostenrahmen. Deshalb ergeben sich oft Testintervalle von mehreren Monaten. Störungen an der HLK Anlage können somit erst nach einer zum Teil erheblichen Zeitverzögerung festgestellt werden, womit ein Sicherheitsrisiko oder der nicht optimale Betrieb der HLK Anlage über längere Zeit unentdeckt bleiben kann US-A-20050274417 offenbart ein Verfahren und ein Fluidstromventil gemäß dem Oberbegriff der unabhängigen Ansprüche 1 und 9.

### Darstellung der Erfindung

Aufgabe der Erfindung ist es, ein in dem eingangs genannten technischen Gebiet zugehörendes Verfahren und ein System zu schaffen, welche eine effiziente Überprüfung einer HLK Anlage ermöglichen, häufig durchführbar sowie kostengünstig sind.

Die Lösung der Aufgabe ist durch die Merkmale der unabhängigen Ansprüche 1 und 9 definiert.

Im Rahmen der Erfindung soll der Ventilkörper mindestens einmal bewegt werden. Das erste Stellsignal soll daher einer ersten, gegenüber einer aktuellen Sollposition veränderten Sollposition des Fluidstromventils entsprechen.

Die Funktionsdiagnose ist ein Wert, der anzeigt, ob das Fluidstromventil die Steuerbefehle tatsächlich ordnungsgemäss ausführt. Besteht z.B. ein mechanischer Mangel oder Defekt, so wird der Ventilkörper nicht in die von der Steuerschaltung vorgegebenen Sollpositionen gehen. Entsprechend wird das erste Sensorsignal nicht einen zu erwartenden Messwert ergeben. Somit lässt sich durch Auswerten bzw. Vergleichen der erfassten Sensorsignale eine Fehlfunktion diagnostizieren. Zur gleichen Diagnose wird es kommen, wenn z.B. der Motor ausfällt (oder nicht am Strom angeschlossen ist) oder wenn die Verkabelung fehlerhaft ist, so dass das Steuersignal gar nicht erst zum Motor gelangt.

Die Steuerschaltung kann in einer Zentrale verwirklicht sein, welche ein ganzes Gebäude überwacht. Sie kann aber auch in einer untergeordneten Stockwerksteuerung (welche die Antriebe eines Stockwerks steuert und kontrolliert) oder im gleichen Gehäuse wie der Ventilmotor untergebracht sein.

Das Auswertemodul kann ein Rechenprogramm sein, das in der Zentralsteuerung der HLK-Anlage installiert ist oder das auf einem Prozessor läuft, welcher im Gehäuse des Antriebs angeordnet ist. Weiter kann die Auswertung auch an einem anderen Ort erfolgen, z.B. auf einem Wartungsrechner, welcher über das Internet mit einem Prozessor zur Steuerung des Ventilmotors oder zur Regelung des Fluidstroms am Ort des Fluidstromventils verbunden ist.

Mit dem genannten Verfahren ist es möglich, die Funktion des Fluidstromventils in automatisierter Weise zu überprüfen. Die Vorgabe einer von der aktuellen Ventilkörperstellung verschiedenen Sollposition führt zu einer Veränderung im verfügbaren Querschnitt des Fluidstromkanals, was mit den Sensoren, die vorzugsweise ohnehin in der Umgebung des Fluidstromventils im Fluidstromkanal vorhanden sind, detektiert werden kann. Es können natürlich auch mehrere verschiedene Sollpositionen vorgegeben werden und zu jeder das zugehörigen Messsignal des Sensors erfasst werden, so dass eine detaillierte Funktionsdiagnose erstellt werden kann.

Optional ermittelt das Auswertemodul die Funktionsdiagnose in Form eines von zwei oder drei möglichen Zuständen. Die zwei möglichen Zustände können dem Wert "funktionstüchtig" und "fehlerhaft" entsprechen. Wird als Ergebnis der Funktionsdiagnose der Wert "fehlerhaft" oder "unklar" ausgegeben, ist dies ein Indiz dafür, dass das Fluidstromventil durch einen Techniker vor Ort inspiziert und repariert werden muss. Bei Bedarf kann ein dritter Zustand vorgesehen sein, welcher dem Wert "unklar" entspricht. Der Wert "unklar" kann zum Ausdruck bringen, dass das Fluidstromventil zwar funktioniert, aber nicht die gewünschten optimalen Sensorsignale liefert. In einem solchen Fall kann mit der Inspektion unter Umständen noch zugewartet werden.

Denkbar ist auch, dass vier oder mehr Ergebniszustände vorgesehen sind. Dies wird aber nur dann Sinn machen, wenn die Sensorsignale eine genügend differenzierte Funktionsdiagnose zulassen. Allerdings wird es in der Regel genügen, möglichst wenige (also nicht mehr als drei) verschiedene Funktionsdiagnosen zur Verfügung zu stellen. Es ist zu beachten, dass es im Rahmen der Erfindung nicht um die Wörter "funktionstüchtig", "fehlerhaft" und "unklar" geht, sondern um deren technische Aussage. Entscheidend ist, dass z.B. nur zwei Werte als Ergebnis der Funktionsdiagnose möglich sind.

Vorzugsweise wird das Ergebnis der Funktionsdiagnose an eine zur Überwachung mehrerer Fluidstromventile ausgelegte Zentraleinheit übermittelt. Das kann die Hauszentrale des Gebäudes sein, welche auch die HLK-Anlage überwacht und regelt. Es kann aber auch eine Steuerung sein, welche in einem als Master fungierenden Fluidstromventil vorgesehen ist. Die Fluidstromventile einer HLK-Anlage verfügen also vorzugsweise über ein Datenübertragungsmodul, (z.B. nach dem Ethernet-Standard) über welches sie Steuersignale, Sensormesswerte und Funktionsdiagnosen übermitteln bzw. austauschen können.

Alternativ oder zusätzlich kann das Ergebnis der Funktionsdiagnose in einem lokalen Datenspeicher im Fluidstromventil abgespeichert oder auf einem kostengünstigen Display am Fluidstromventil angezeigt werden.

Optional werden zwei verschiedene Sollpositionen vorgegeben und entsprechend zwei Sensorsignale erfasst. Ferner kann vorgängig zum Registrieren des ersten und des zweiten Signals des Sensors ein Fluidstrom im Fluidstromkanal der HLK-Anlage bereitgestellt werden. Es ist dann möglich, die Funktionsdiagnose auf Basis einer Veränderung des Fluidstroms zu berechnen, welche sich beim Ändern der Sollposition des Ventilkörpers ergeben muss. Der Sensor ist in diesem Fall zum Messen eines Fluidstromparameters des Fluidstroms ausgebildet. Insbesondere ist der Sensor zum Messen eines Fluiddrucks (bzw. eines Druckabfalls), einer Fluidgeschwindigkeit oder eines Fluidvolumens (pro Zeiteinheit), ausgebildet.

Das Bereitstellen des Fluidstroms kann z. B. dadurch erfolgen, dass an einen Fluidstromantrieb (Ventilator, Gebläse) ein Steuersignal übermittelt wird, um einen Fluidstrom mit einem bestimmten Fluidstromparameter (z. B. einer bestimmten Fluidgeschwindigkeit) zu erstellen. Es kann natürlich auch mit einem vorgegebenen (typischerweise konstanten) Fluidstrom gearbeitet werden. Das Bereitstellen bedeutet, dass sichergestellt ist, dass ein Fluidstrom in der HLK-Anlage vorhanden ist. So kann z.B. in einem Fluidstromkanal von Natur aus ein Fluidstrom ("Durchzugsströmung") vorhanden sein, so dass "Bereitstellen" im Rahmen der Erfindung nicht auf das aktive Erzeugen durch einen Antrieb beschränkt zu verstehen ist.

Insbesondere wenn es darum geht, ein ordnungsgemässes Schliessen des Ventilkörpers zu diagnostizieren, kann ein akustischer Sensor (Schallsensor, Mikrofon) verwendet werden. Vorzugsweise wird auf der einen Seite des Ventilkörpers (im Fluidstromkanal) der akustische Sensor und auf der anderen Seite des Ventilkörpers (im Fluidstromkanal) ein akustischer Signalgeber (Tongenerator wie z.B. ein Lautsprecher oder ein Piezoelement) angeordnet. Sofern das Fluidstromventil bei Vorgabe des Stellsignals für die geschlossene Sollposition nicht richtig schliesst, kann das sehr leicht anhand einer ungenügenden Dämpfung des akustischen Signals am Ort des akustischen Sensors festgestellt werden. Wird im Fluidstromkanal Luft transportiert, ist die akustische Messung besonders empfindlich und daher vorteilhaft.

Der Schall muss nicht zwingend am Ort des Fluidstromventils erzeugt werden. Er kann auch an einem entfernten Ort (z.B. für zwei oder mehr Fluidstromventile gleichzeitig) erzeugt werden. Es ist auch denkbar, dass von einem (ständig) vorhandenes Störgeräusch (welches z.B. von einem Fluidstromantrieb der HLK abgegeben wird) und dass am Ort des Fluidstromventils nur das Mikrofon vorhanden ist.

Vorzugsweise wird als Fluidstromparameter ein Fluiddruck erfasst. Drucksensoren sind in bestehenden Anlagen schon weit verbreitet und die Erfindung kann deshalb in bestehenden Anlagen mit installierten Drucksensoren einfach umgesetzt werden.

Alternativ oder zusätzlich zum Fluiddruck kann als Fluidstromparameter eine Fluidgeschwindigkeit erfasst werden.

Alternativ oder zusätzlich wird als Fluidstromparameter ein Fluidvolumen pro Zeiteinheit erfasst. So kann beispielsweise das Fluidvolumen ermittelt werden, welches während einer bestimmten Messdauer den Fluidstromkanal durchfliesst, um durch einen Vergleich mit einem Sollwert zu bestimmen.

Die erste Sollposition ist eine geschlossene Ventilstellung. Die zweite der genannten Sollpositionen kann z.B. die vollständig offene Ventilstellung sein. Bei vielen Ventilen, insbesondere bei Brandschutzklappen ist es besonders wichtig, dass der Fluidstromkanal vollständig geschlossen werden kann, wenn ein Notfall (z.B. eine Brandmeldung) im System besteht. Es gibt aber auch Ventile, die im Notfall vollständig geöffnet werden sollen.

Bei der vollständigen Schliessung des Fluidstromventils werden betreffend den Fluidstrom Maximalwerte erreicht, also z. B. eine maximale Fluidgeschwindigkeit oder ein maximaler Fluiddruck. Die Sensitivität der Messung kann dadurch verbessert werden, wodurch die Verlässlichkeit der Auswertung optimiert ist. Vorzugsweise werden vor dem Vorgeben des ersten Stellsignals oder nach dem Registrieren des ersten Signals des Sensors folgende Schritte durchgeführt:
a) Vorgeben eines zweiten, vom ersten Stellsignal verschiedenen Stellsignals durch die Steuerschaltung an den Ventilmotor, wobei das zweite Stellsignal einer zweiten Sollposition des Fluidstromventils (5) entspricht,
b) Registrieren eines zweiten Signals des Sensors,
c) Ermitteln der Funktionsdiagnose des Fluidstromventils auf Basis des ersten und des zweiten Signals des Sensors durch das Auswertungsmodul (9).

Die Vorgabe des zweiten Stellsignals kann darin bestehen, dass von einer bereits bestehenden definierten Position ausgegangen wird, so dass der Ventilkörper seine Position (noch) nicht ändert. Dies ist dann der Fall, wenn das Fluidstromventil nur im Notfall betätigt wird und standardmässig in einer Warte- bzw. Ruhestellung ist. Es können aber auch aktiv zwei verschiedene Sollpositionen angefahren werden, z.B. die offene und die geschlossene Ventilstellung.

Es ist nicht zwingend, dass die eine Sollposition die vollständig geschlossene und die andere die vollständig offene Ventilstellung ist. Es ist z.B. auch möglich, dass neben der geschlossenen bzw. offenen Sollposition eine halboffene gewählt wird. Dies zum Beispiel dann, wenn das Fluidstromventil im Zeitpunkt des erfindungsgemässen Funktionstests gerade eine halboffene Stellung (bzw. eine Zwischenposition) einnimmt.

Vorzugsweise erfolgt die Auswertung der Messdaten resp. das Berechnen der Funktionsdiagnose derart, dass als Funktionszustand die ordnungsgemässe Dichtigkeit eines Fluidstromkanals ermittelbar ist. Nach der Bereitstellung eines Fluidstroms wird das Fluidstromventil vollständig geschlossen und beispielsweise ein Fluiddruck erfasst. Der erfasste Fluiddruck wird mit einem zu erwartenden Fluiddruck oder mit einem Fluiddruck aus einer Referenzmessung verglichen. Falls der Vergleich z. B. eine Toleranz von 10% überschreitet, wird durch das Auswertemodul signalisiert, dass ein Leck im Fluidkanal vorliegt. Dieser Test setzt natürlich voraus, dass das Fluidstromventil selbst zuverlässig vollkommen schliesst. Das vollständige Schliessen kann z.B. mit den bereits erwähnten akustischen Sensoren, also unabhängig von der Druckmessung erfolgen. Dies ist ein Beispiel dafür, dass es sinnvoll sein kann, sowohl akustische Sensoren einzusetzen, als auch Sensoren zum Erfassen von Fluidstromparametern (Druck, Geschwindigkeit, Volumenstrom).

Das erfindungsgemässe Verfahren kann insbesondere bei der regelmässigen Überprüfung von Brandschutzklappenvorrichtungen eingesetzt werden. Das heisst, dass als Fluidstromventil eine Brandschutzklappe vorgesehen ist und dass das Ermitteln der Funktionsdiagnose derart erfolgt, dass das dichte Schliessen der Brandschutzklappe ermittelt wird. Alternativ kann auch das ordnungsgemässe Öffnen einer Brandschutzklappe diagnostiziert werden.

Die Aktivierung der Funktionsdiagnose (also die Vorgabe der Sollpositionen und das Messen der Sensorsignale) kann sowohl dezentral als auch zentral erfolgen. Bei einer dezentralen Aktivierung erfolgt die Aktivierung beispielsweise direkt durch das dem Fluidstromventil zugeordnete Stellmodul (Steuerschaltung), beispielsweise aufgrund eines Zeitplans (in regelmässigen oder gezielt unregelmässigen Intervallen), aufgrund von anderen (separaten) Zustandsmessungen, welche eine Funktionskontrolle erforderlich machen, oder aufgrund eines bestimmten Ereignisses. Bei einer zentralen Aktivierung wird typischerweise individuell an jedes Fluidstromventil ein Steuersignal übermittelt, und zwar insbesondere von einer zentralen Anlagensteuerung an das dezentral eingebaute Stellmodul, mit welchem ein Fluidstromventil betätigbar ist. Ziel der Aktivierung des Stellmoduls ist es, einen bestimmten Funktionszustand (z. B. "Ventil geschlossen" oder "Ventil offen") zu erstellen. Die Aktivierung ist also der elektronische Befehl an das Stellmodul, um z. B. den Stellwinkel des Ventilkörpers des Fluidstromventils in eine vorgegebene Position zu bringen.

Es wird danach gemessen, wie sich der Fluidstrom verändert oder einstellt aufgrund der Veränderung bzw. Einstellung der Position des Ventilkörpers. Eine Veränderung kann sich einfach schon dadurch ergeben, dass die Sollposition, welche durch die Aktivierung vorgegeben wird, anders ist, als die vor der Aktivierung bestehende Sollposition (welche z. B. dem aktuellen Regelbetrieb entspricht). Eine Veränderung kann natürlich auch gezielt herbei geführt werden, indem zuerst eine Aktivierung für eine erste Sollposition und danach eine Aktivierung für eine zweite Sollposition übermittelt wird und indem nach jedem Übermitteln eine Messung der Fluidstromparameter durchgeführt ist. (Die erste und die zweite Sollposition sind verschieden.)

Ändert sich der Fluidstromparameter nicht trotz der gezielten Änderung der Sollposition des Ventilkörpers, ist das ein Indiz für eine Fehlfunktion. Dies wird durch Auswertung der erfassten Messdaten ermittelt. Die Auswertung beinhaltet gemäss der Erfindung das rechnerische Ergebnis, dass eine vorgegebene Komponente der HLK-Anlage korrekt oder fehlerhaft funktioniert. Die Auswertung kann beispielsweise durch den Vergleich von mehreren Messungen mit unterschiedlichen Ventilstellungen oder durch den Vergleich mit einem Sollwert erfolgen. Das Fluidstromventil kann sich beispielsweise auf ein Ventil oder eine Klappe beziehen. Ist der Funktionszustand bestimmt, dann kann von einer dezentralen Einrichtung (Stellmodul, lokales Master-Ventil) oder von einer zentralen Anlagensteuerung eine elektronische Meldung oder ein Signal ausgegeben oder angezeigt werden, so dass das Wartungspersonal die nicht funktionstüchtige Komponente vor Ort überprüfen gehen kann. Auf diese Weise kann die Wartung und die Funktionskontrolle automatisiert und mit geringerem Personalaufwand regelmässig durchgeführt werden.

Das erfindungsgemässe Verfahren ist nicht zu verwechseln mit dem üblichen Regelbetrieb einer HLK-Anlage. Zwar werden auch im Regelbetrieb (d. h. bei der Regelung der Belüftung eines Gebäudes, um die Luftzufuhr und Klimaverhältnisse der Räume bedürfnisgerecht einzustellen) ein Fluidstrom bereitgestellt, ein Fluidstromventil betätigt (um z. B. den Luftstrom lokal abzuschwächen) und ein Fluidstromparameter erfasst (um z. B. den Betriebszustand der Anlage zu aktualisieren und die Basis für die weitere Regelung der Luftzufuhr zu schaffen). Es gibt aber im üblichen Regelbetrieb keine zentrale oder dezentrale Auswertung, welche zum Ergebnis hat, dass die zu prüfende Komponente (z. B. das Fluidstromventil) funktionstüchtig ist oder nicht. Im Gegenteil: Im Normalbetrieb wird davon ausgegangen, dass die Komponenten funktionieren (und nicht defekt sind) und es wird nach deren Betätigung anhand der Messdaten berechnet, ob z. B. das Fluidstromventil die Betätigung tatsächlich und korrekt ausgeführt hat. Der übliche Regelbetrieb der zentralen Steuerung basiert auf den errechneten und abgegebenen Steuersignalen für die Sollposition.

Bevorzugt wird beim Auswerten der Messdaten ein Vergleich mit Referenzdaten durchgeführt. Die Referenzdaten können aus einer Messung stammen, wie z. B. einer Eichmessung die vor der Inbetriebnahme erfolgt ist. In einer anderen Ausführungsvariante können die Referenzdaten auf Rechenmodellen basieren, wie z. B. einem Strömungsmodell, das aufgrund der Geometrie (Querschnitt, Längsverlauf etc.) des Strömungskanals und z.B. der Druckverhältnisse und der physikalischen Eigenschaften (z.B. Viskosität) des Fluids von der Auswerteeinheit durchgerechnet wird (oder vorgängig zur Inbetriebnahme von einem Computer durchgerechnet worden ist).

Bevorzugt wird als Fluidstrom ein Luftstrom bereitgestellt. Die Erfindung kann dann in HLK Anlagen eingesetzt werden, welche Luft als Transportmittel für Wärme oder Feuchtigkeit einsetzen.

Alternativ wird als Fluidstrom ein Wasserstrom eingestellt. Dabei erfolgt beispielsweise der Transport von Wärme in Wasserleitungen zu Heizkörpern. Die Erfindung findet somit praktisch in jeder HLK Anlage Anwendung, welche neben Luft auch Wasser für den Wärme- oder Kältetransport nutzt.

Vorzugsweise werden (erforderlichenfalls nach dem Bereitstellen eines Fluidstroms) erste Steuerdaten an das Fluidstromventil bzw. an das Stellmodul übermittelt. Anschliessend werden erste Messdaten (Sensorsignale) eines Fluidstromparameters des Fluidstroms erfasst und an das Auswertemodul übertragen. Dann werden zweite Steuerdaten an das Stellmodul übermittelt, um einen anderen Funktionszustand (d.h. eine andere Ventilkörperstellung) zu erreichen, und anschliessend werden zweite Messdaten eines Fluidstromparameters des Fluidstroms erfasst und an das Auswertemodul übertragen. Schliesslich werden die ersten Messdaten sowie die zweiten Messdaten zur Bestimmung des Funktionszustands der HLK Anlage im Auswertemodul ausgewertet. Bei der ersten bzw. zweiten Aktivierung des Stellmoduls wird eine erste bzw. zweite (gegenüber der ersten Einstellung verschiedene) Einstellung des Fluidstromventils vorgenommen. Somit wird der Unterschied des Fluidstromparameters für zwei unterschiedliche Reglerstellungen bestimmt. Aufgrund von Eichmessungen oder physikalischen Modellen kann aus diesem Unterschied ein Funktionszustand der HLK Anlage bestimmt werden.

Bevorzugt erfolgt die Auswertung der Messdaten derart, dass als Funktionszustand das ordnungsgemässe Verstellen eines Fluidstromventils ermittelbar ist. Nach der Bereitstellung eines Fluidstroms wird der Fluidstromventil in eine erste und eine zweite Position verstellt und beispielsweise eine Differenz des Fluiddrucks zwischen diesen zwei Positionen erfasst. Falls die Fluiddruckdifferenz nicht dem aus der ersten und zweiten Position des Fluidstromventils zu erwarteten Wert entspricht, also z. B. eine Toleranz von 10% überschreitet, wird durch das Auswertemodul signalisiert, dass eine Funktionsstörung des Fluidstromventils vorliegt.

Ein erfindungsgemässes System (Vorrichtung) zur automatisierten Funktionskontrolle einer HLK Anlage (HLK: Heizung, Lüftung, Klima), umfasst
a) einen Fluidstromkanal,
b) ein in diesem angeordnetes Fluidstromventil, welches einen Ventilkörper im Fluidstromkanal und einen den Ventilkörper bewegenden Ventilmotor zur Betätigung des Fluidstromventils aufweist,
c) eine Steuerschaltung zur Steuerung des Ventilmotors und zum Vorgeben eines ersten Stellsignals an den Ventilmotor (15; 22),
d) einen Sensor im Fluidstromkanal, und
e) ein Auswertemodul zum Ermitteln einer Funktionsdiagnose des Fluidstromventils auf Basis eines Signals des Sensors.

Das Auswertemodul ist z.B. ein Rechenprogramm, welches auf einem Prozessor eines zentralen Rechners (welcher eine Mehrzahl von Fluidstromventilen überwacht) oder eines intelligenten Fluidstromventils läuft.

Vorzugsweise ist die Steuerschaltung programmiert, um den Ablauf des automatischen Funktionstests durchzuführen. Sie führt z.B. insbesondere folgende Schritte aus:
a) Vorgeben eines ersten Stellsignals durch die Steuerschaltung an den Ventilmotor, wobei das Stellsignal einer ersten Sollposition des Fluidstromventils entspricht,
b) Registrieren eines ersten Signals des Sensors durch das Auswertungsmodul,
c) Vorgeben eines zweiten, vom ersten Stellsignal verschiedenen Stellsignals durch die Steuerschaltung an den Ventilmotor, wobei das Stellsignal einer zweiten Sollposition des Fluidstromventils entspricht,
d) Registrieren eines zweiten Signals des Sensors durch das Auswertungsmodul,

Wie bereits weiter oben im Zusammenhang mit dem Verfahren erwähnt, umfasst ein erfindungsgemässes System optional einen Fluidstromantrieb zum Bereitstellen eines Fluidstroms in einem Fluidstromkanal der HLK Anlage. Der Sensor ist dann vorzugsweise als Fluidstromsensor zur Erfassung von Messdaten betreffend einen Fluidstromparameter des Fluidstroms ausgebildet.

Durch den Fluidstromantrieb wird ein Fluidstrom mit einem bestimmten Wert eines Fluidstromparameters, wie z.B. einer bestimmten Fluidgeschwindigkeit erzeugt. Mit einem geeigneten Sensor wird der aktuelle Wert des Fluidstromparameters (z.B. Fluiddruck, Fluidgeschwindigkeit und/oder Fluidvolumen pro Zeiteinheit) nach dem Vorgeben der ersten und der zweiten Sollposition ermittelt.

Das Auswertemodul ist beispielsweise eingerichtet, um einen Fluidstromparameter in regelmässigen Intervallen zu vergleichen und aufgrund von Veränderungen den Funktionszustand einer Komponente zu bestimmen.

Das System kann (wie bereits weiter obern erwähnt) zusätzlich oder alternativ zu den Fluidstromsensoren weitere Sensoren, insbesondere akustische Sensoren aufweisen. Weiter können akustische Signalgeber vorgesehen sein, welche das zu detektierende akustische Signal erzeugen. Es ist aber auch denkbar, dass die akustischen Sensoren Signale auswerten, die aufgrund von Störungen oder Geräuschen ohnehin im Bereich des Ventilkörpers auftreten und durch die (offene oder geschlossene) Stellung des Ventilkörpers beeinflusst werden (Hintergrundrauschen).

Die Sensoren sind in Strömungsrichtung vor oder hinter dem Ventilkörper im Fluidstromkanal angeordnet. Typischerweise haben Sie einen Abstand von weniger als 1 m, insbesondere weniger als 50 cm vom Ventilkörper.

Vorzugsweise umfasst das System ein Stellmodul zur Betätigung eines Fluidstromventils der HLK Anlage. Durch die Steuerschaltung (bzw. das Stellmodul) wird ein Fluidstromventil eingestellt und der Fluidstromparameter verändert. Mit dem Fluidstromsensor wird diese Veränderung erfasst und durch ein Auswertemodul werden die erfassten Messdaten ausgewertet und ein Funktionszustand einer Komponente der HLK Anlage bestimmt. Die Auswertung kann beispielsweise durch den Vergleich von mehreren Messungen mit unterschiedlichen Sollpositionen oder durch den Vergleich mit einem Sollwert erfolgen.

Bevorzugt weist das Auswertemodul einen Speicher zur Abspeicherung von Referenzdaten auf, wobei das Auswertemodul eingerichtet ist, aufgrund eines Vergleichs der Messdaten mit den Referenzdaten einen Funktionszustand einer Komponente der HLK Anlage zu bestimmen. Referenzdaten können insbesondere aufgrund von Eichmessungen erstellt werden.

Entsprechend dem weiter oben offenbarten Verfahren ist beim erfindungsgemässen System das Auswertemodul vorzugsweise eingerichtet, um aufgrund der Messdaten als Funktionszustand der HLK Anlage das ordnungsgemässe (d. h. den zuvor übermittelten Steuersignalen entsprechende) Verstellen eines Fluidstromventils, die ordnungsgemässe (d. h. den vorgegebenen Werten entsprechende) Dichtigkeit eines Fluidstromkanals- und/oder die ordnungsgemässe (d. h. der zur Filterung nötigen und zumindest erforderlichen) Durchlässigkeit eines Filters zu bestimmen. Das erfindungsgemässe System ist somit eingerichtet, um die Funktionstüchtigkeit dezentraler Komponenten einer HLK Anlage von der zentralen Anlagensteuerung aus zu überprüfen.

Das erfindungsgemässe Verfahren kann auch mit einem sogenannt intelligenten Fluidstromventil verwirklicht werden. Dieses umfasst:
a) einen Ventilkörper, welcher im Fluidstromkanal angeordnet werden kann,
b) einen den Ventilkörper bewegenden Ventilmotor zur Betätigung des Fluidstromventils,
c) eine Steuerschaltung zur Steuerung des Ventilmotors,
d) eine Schnittstelle zu einem Sensor, welcher im Fluidstromkanal angeordnet werden kann,
e) ein Auswertemodul zur Auswertung von Signalen des Sensors.

Die Steuerschaltung ist zum Vorgeben eines ersten Stellsignals an den Ventilmotor ausgebildet, wobei das Stellsignal einer ersten Sollposition des Ventilkörpers entspricht. Und das Auswertemodul ist zum Registrieren eines ersten Signals des Sensors und zum Berechnen einer Funktionsdiagnose des Fluidstromventils (20) auf Basis des ersten Signals des Sensors (28) ausgebildet.

Ein solches Fluidstromventil kann über eine Datenverbindung an eine Zentrale bzw. einen Fernwartungsrechner angeschlossen werden und ermöglicht ohne grossen Aufwand eine automatisierte Funktionsdiagnose. Vorzugsweise ist der Sensor direkt im Fluidstromventil (bzw. in einem Gehäuse bzw. Rohrstück, welches Teil des Fluidstromventils ist) eingebaut. Es kann aber auch einfach eine Anschlussbuchse (als Schnittstelle) für einen Stecker einer selbständigen Sensorvorrichtung vorgesehen sein.

Besonders vorteilhaft ist es, wenn das Fluidstromventil als Sensor ein Mikrofon umfasst und dass sie einen elektro/akustischen Wandler (27) zur Erzeugung von Schallsignalen umfasst. Dadurch kann sehr genau und kostengünstig die dichte Schliessstellung ermittelt werden. Es können aber auch die weiter oben genannten Sensoren zur Erfassung von Fluidstromparametern im Fluidstromventil eingebaut sein.

Was bereits im Zusammenhang mit dem erfindungsgemässen Verfahren bezüglich einer zweiten Sollposition und einer zugehörigen zweiten Messung des Sensorsignals gesagt worden ist, gilt auch sinngemäss für ein Fluidstromventil mit integrierter Steuerschaltung und integriertem Auswertemodul.

Der Ventilkörper kann in einem kurzen Rohrstück eingesetzt sein, welches mit seinen Enden an den Fluidkanal angeschlossen werden kann. Es gibt aber auch Fluidstromventile, welche als Klappe ausgebildet sind und welche in ein bestehendes Rohr eingesetzt werden können (vgl. WO 2005/053975, Belimo). Es sind auch Klappen bekannt, welche bereits mit einem Sensor versehen sind (vgl. WO 2009/109056, Belimo). Bei diesen bekannten Ventilen kann die Erfindung ohne grossen zusätzlichen Aufwand realisiert werden, indem die Steuerung im Gehäuse des Antriebs integriert ist. Der Inhalt der beiden Veröffentlichungen WO 2005/053975 und WO 2009/109056 wird hiermit durch Bezugnahme in der vorliegenden Anmeldung eingeschlossen.

Das Fluidstromventil ist vorzugsweise eine Brandschutzklappenvorrichtung zum Einbau in einen Fluidstromkanal einer HLK-Anlage.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: eine schematische Darstellung eines HLK-Systems mit Funktionsdiagnose für ein Fluidstromventil;
- Fig. 2: ein Lüftungssystem, in welchem die Erfindung Anwendung findet; und
- Fig.3: eine schematische Darstellung einer Brandschutzklappenvorrichtung mit Funktionsdiagnose;
- Fig. 4: eine schematische Darstellung eines vorteilhaften Verfahrens.

Grundsätzlich sind in den Figuren gleiche Teile mit gleichen Bezugszeichen versehen.

### Wege zur Ausführung der Erfindung

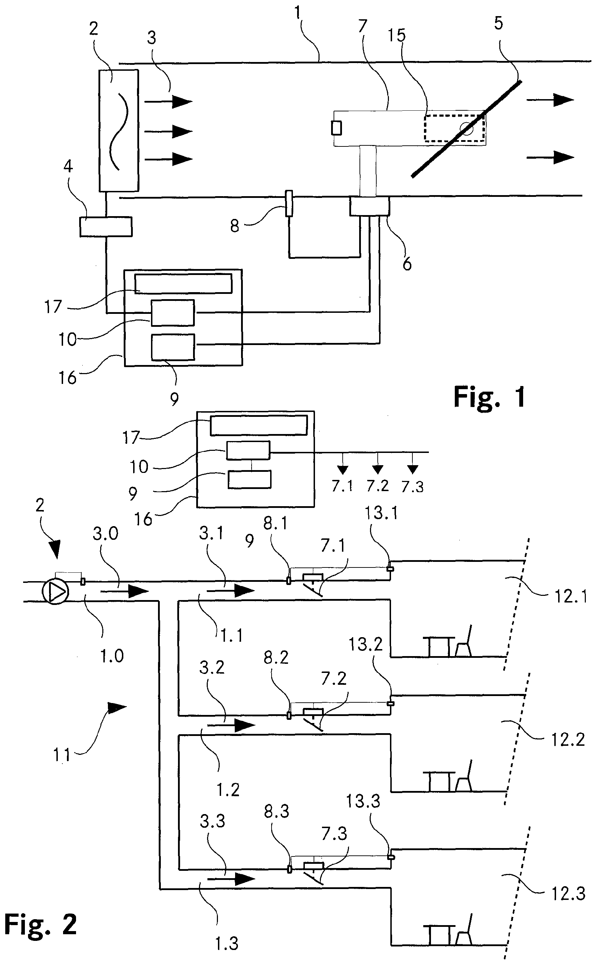

Fig. 1 zeigt ein erfindungsgemässes System zur automatisierten Funktionskontrolle einer HLK Anlage (HLK: Heizung, Lüftung, Klima). In einer Fluidstromkanal 1 einer HLK Anlage wird durch einen Fluidstromantrieb 2 ein Fluidstrom 3 erzeugt.

Der Fluidstrom 3 ist beispielsweise ein Luftstrom mit einer bestimmten Temperatur, einer bestimmten Feuchtigkeit, einem bestimmten Reinheitsgrad und/oder irgendeinem anderen zu regelnden bzw. vorgebbaren Parameter. Er wird in die Räume eines Gebäudes geleitet, um darin ein gewünschtes Raumklima herzustellen. Dazu umfasst die HLK Anlage beispielsweise an sich bekannte Heizvorrichtungen, Kühlvorrichtungen, Befeuchtungseinrichtungen, Trockenvorrichtungen, Filtereinrichtungen oder irgendwelche andere Einrichtungen zur Beeinflussung von Parametern des Luftstroms. Diese Einrichtungen und Geräte werden in bekannter Weise zur Regelung des Raumklimas eingesetzt und sind hier nicht näher erläutert oder dargestellt, da sie nicht Teil der Erfindung sind.

Der Fluidstromantrieb 2 kann insbesondere einen frequenzumformergesteuerten Ventilator bzw. ein Gebläse aufweisen, um in Lüftungskanälen einer HLK Anlage einen Luftstrom zu erzeugen. Zum Bereitstellen des Fluidstroms 3 mit dem Fluidstromantrieb 2 ist eine Antriebssteuerung 4 vorgesehen, mit welcher der Fluidstromantrieb 2 gesteuert wird. Die Antriebssteuerung 4 und der Fluidstromantrieb 2 können in einer Einheit zusammengebaut, oder wie in Fig. 1 schematisch skizziert als separate Einheiten aufgebaut sein. Die Antriebssteuerung kann beispielsweise das Ein- oder Ausschalten des Fluidstromantriebs 2, das Einstellen einer Rotationsgeschwindigkeit, oder irgendein anderes Merkmal des Fluidstromantriebs 2 vorgeben oder regeln. Entsprechend der Steuerung des Fluidstromantriebs 2 wird ein Fluidstrom 3 erzeugt, welcher beispielsweise eine bestimmte Fluidstromgeschwindigkeit, einen bestimmten Fluidstromdruck oder ein bestimmtes Fluidstromvolumen aufweist.

Um an einer bestimmten Stelle oder in einem bestimmten Abschnitt des Fluidstromkanals 1 einen bestimmten Fluidstrom 3 zu erhalten, ist (wie in Fig. 1 schematisch dargestellt) ein einstellbares Fluidstromventil 5 vorgesehen, welches im vorliegenden Fall eine Luftklappe 5 und einen Motor 15 umfasst. Der mechanische und elektrische Aufbau des Fluidstromventils 7 kann so sein, wie z. B. aus der WO 2005/053975 A1 (Belimo) bekannt. Ein anderer (modularer) Aufbau ist z.B. aus der WO 2007/006162 A1 (Belimo) bekannt, wonach ein Motor mit eingebauter Regelung auf eine Welle einer Klappe aufgesetzt werden kann.

Die Luftklappe 5 kann z. B. vollständig geschlossen werden, um den Fluidstrom 3 zu unterbrechen, oder sie kann vollständig geöffnet werden, um den Fluidstrom 3 maximal durchzulassen. Es lassen sich zudem beliebige Zwischenpositionen der Luftklappe 5 einstellen, womit der Fluidstrom 3 zwischen einem Minimalwert und einem Maximalwert nach Bedarf regulierbar ist.

Zur Einstellung des Fluidstromventils 5 ist ein Stellmodul 6 (elektronische Steuerung) vorgesehen, welches den Motor 15 (elektrischer Antrieb der Luftklappe) steuert. Gemäss einer bevorzugten Ausführungsform sind Motor 15 und Stellmodul 6 in einem gemeinsamen Gehäuse untergebracht, an welchem die Luftklappe 5 drehbar gelagert ist. Eine separate oder im Gehäuse des Antriebs (bzw. Stellmoduls) integrierte Regelschaltung regelt im Normalbetrieb den Fluidstrom 3 auf einen von einer Gebäudesteuerung 16 übermittelten Wert, gegebenenfalls unter Verwendung der Signale eines nachfolgend beschriebenen Fluidstromsensors 8.

Im Fluidstromkanal 1 ist ein Fluidstromsensor 8 angeordnet, mit welchem ein Fluidstromparameter wie z. B. ein Fluiddruck, eine Fluidgeschwindigkeit, ein Fluidvolumen pro Zeit, oder irgendein anderer Fluidstromparameter erfassbar ist. Beim Fluidstromsensor 8 kann es sich um ein Anemometer wie in der WO 2009/109056 (Belimo) beschrieben handeln, aus welcher sich eine besonders bevorzugte Ausführungsform einer Klappe mit zugehörigem Sensor ergibt.

Der Fluidstromsensor 8 ragt beispielsweise in den Fluidstromkanal 1 hinein. Der Fluidstromsensor 8 kann an der Innenwand des Fluidstromkanals 1 angebracht und nach aussen verkabelt sein, oder bei Bedarf kann für den Sensor eine Halterung (z.B. eine Stange) vorgesehen sein, um den Fluidstromsensor 8 im Zentrum des Fluidstromkanals zu positionieren. Der Fluidstromsensor 8 kann stromaufwärts oder stromabwärts in der Nähe des Fluidstromventils 7 (z.B. 0.5 m von der Luftklappe entfernt) angeordnet sein. Falls der Fluidstromsensor 8 stromaufwärts zur Luftklappe 5 angeordnet ist, dann wird bei geschlossenem Luftklappe 5 gegenüber dem geöffneten Klappenstellung ein erhöhter Fluiddruck, eine reduzierte Fluidgeschwindigkeit oder ein vermindertes Fluidvolumen pro Zeiteinheit gemessen. Bei einem gegenüber der Luftklappe 5 stromabwärts angeordneten Fluidstromsensor 8 sind die dargestellten qualitativen Zusammenhänge gerade umgekehrt.

In Fig. 1 ist schematisch ein Auswertemodul 9 dargestellt. Dieses ist signalmässig mit dem Fluidstromsensor 8 verbunden, sodass vom Fluidstromsensor 8 erfasste Signale an das Auswertemodul 9 übermittelbar und dort als Messdaten abspeicherbar und verarbeitbar sind. Das Auswertemodul 9 umfasst beispielsweise einen programmierbaren Mikroprozessor mit einem Speicher zur Abspeicherung von Daten und Programmen. Das Auswertemodul 9 ist im vorliegenden Beispiel zentral in einen Zentralrechner einer Gebäudesteuerung 16 implementiert.

Ein Teil der erfindungsgemässen Steuerung wird im vorliegenden Beispiel durch die Gebäudesteuerung 16 durchgeführt. Sie ist deshalb signalmässig mit der Antriebssteuerung 4 respektive dem Fluidstromantrieb 2 und dem Stellmodul 6 verbunden und umfasst beispielsweise ein ablauffähiges Softwareprogramm und Hardwareschnittstellen, um Steuersignale an die Antriebssteuerung 4 und an das Stellmodul 6 zu übertragen (und von diesen zu empfangen). Das Auswertemodul 9 ist beispielsweise als ablauffähiges Rechenprogramm (Softwaremodul) abgespeichert, wogegen die Antriebssteuerung 4 respektive der Fluidstromantrieb 2 und das Stellmodul 6 in der Anlage verteilt platzierte, dezentrale Gerätemodule sind.

Bei der Installation eines Fluidstromventils 5 in einer HLK Anlage kann es vorkommen, dass die mechanische Verbindung zwischen der Luftklappe 5 und dem Antrieb 15 oder die elektrische Verbindung zwischen dem Stellmodul 6 und der Gebäudesteuerung nicht ordnungsgemäss erstellt ist. Diese Verbindung kann sich auch während dem Normalbetrieb (aufgrund eines Fehlers) lösen. Insbesondere bei Luftklappen, welche bei einer Katastrophe wie einem Feuer in eine vorgegebene Stellung gefahren werden müssen, können solche gelösten Verbindungen dazu führen, dass die Schadensbegrenzung nicht wie gewünscht erfolgen kann.

Die nachfolgenden Ausführungsbeispiele der erfindungsgemässen Funktionskontrolle einer HLK Anlage gehen davon aus, dass der Fluidstromsensor 8 stromabwärts zum Fluidstromantrieb 2 am Fluidstromkanal 1 und die Luftklappe 5 stromabwärts zum Fluidstromsensor 8 angeordnet sind.

### Beispiel 1:

Zur automatisierten Funktionskontrolle der Luftklappe 5 wird durch das Steuermodul 10 ein Steuersignal erzeugt und an die Antriebssteuerung 4 respektive den Fluidstromantrieb 2 übermittelt, um den Fluidstromantrieb 2 auf eine bestimmte Leistung einzustellen und einen Fluidstrom 3 bereit zu stellen.

Dann wird durch das Steuermodul 10 ein erstes Steuersignal erzeugt und an das Stellmodul 6 übermittelt, um die Luftklappe 5 auf eine erste Sollposition SP1 einzustellen. Diese erste Sollposition ist z.B. die ganz geöffnete Stellung der Luftklappe (Ventilkörper).

Mit dem Fluidstromsensor 8 wird anschliessend der Fluiddruck des Fluidstroms 3 erfasst und im Auswertemodul 9 als erster Fluiddruck p1 abgespeichert.

In einem nächsten Schritt wird ein zweites Steuersignal an das Stellmodul 6 übermittelt, um die Luftklappe 5 in eine zweite Sollposition SP2 zu verfahren. Diese entspricht z.B. der ganz geschlossenen Stellung der Luftklappe.

Danach wird erneut der Fluiddruck des Fluidstroms 3 erfasst und im Auswertemodul 9 als zweiter Fluiddruck p2 abgespeichert.

Aus der eingestellten Leistung des Fluidstromantriebs 2 und der Differenz zwischen der ersten-und zweiten Sollposition ergibt sich ein Sollwert der Fluiddruckdifferenz zwischen dem ersten Fluiddruck p1 und dem zweiten Fluiddruck p2. Der Sollwert der Fluiddruckdifferenz dp (welche einer ordnungsgemässen Funkton des Fluidstromventils entspricht) ist z.B. in einer Sollwerttabelle abgespeichert.. Der Sollwert der Fluiddruckdifferenz dp wird mit der Differenz p2 - p1 zwischen dem gemessenen ersten und zweiten Fluiddruck verglichen. Falls der Vergleich innerhalb einer bestimmten Toleranz ist, beispielsweise innerhalb einer Toleranz von 10% (p2 - p1 ≤ dp/10), dann wird durch das Auswertemodul 9 die Funktionsdiagnose "funktionstüchtig" ermittelt. Das heisst, es ist bestätigt, dass das Fluidstromventil die vorgegebenen Sollwertpositionen tatsächlich ordnungsgemäss eingenommen hat.

Ist die Abweichung zwischen der Druckdifferenz der Sensorsignale und dem Sollwert der Druckdifferenz grösser als z.B. 10% (p2 - p1 > dp/10) wird durch das Auswertemodul 9 die Funktionsdiagnose "fehlerhaft" ermittelt. Das heisst, die Luftklappe 5 führt die Steuersignale nicht ordnungsgemäss aus.

Das Ergebnis der Funktionsdiagnose kann auf der Anzeige 17 der Zentrale (Gebäudesteuerung 16) angezeigt oder in einer Datei abgespeichert werden. Sie kann ferner über eine (drahtlose oder leitungsgebundene) Datenübertragungsstrecke an eine andere Computerarbeitsstation eines Wartungsdienstes übermittelt werden, wobei der Funktionszustand des Fluidstromventils 7 auf einer Anzeige der Computerarbeitsstation dargestellt wird.

### Beispiel 2:

Ein besonders einfacher Ablauf zum Erstellen der Funktionsdiagnose besteht darin, dass ein einziges Steuersignal an das Stellmodul übermittelt wird, welches der geschlossenen Position (Sollposition) des Ventilkörpers entspricht. Danach wird mit einem Volumenstromsensor gemessen, ob die Strömung im Fluidstromkanal 1 zum Stillstand gekommen ist. Falls dies der Fall ist, erzeugt das Auswertemodul die Funktionsdiagnose "funktionstüchtig". Ist der Volumenstrom höher als ein vorgegebener Grenzwert, wird die Funktionsdiagnose "fehlerhaft" erstellt.

Zusätzlich kann ein dritter Zustand der Funktionsdiagnose vorgesehen sein, welcher die Dichtigkeit als noch ausreichend aber kritisch einstuft. Dieser Zustand wird im Rahmen der Erfindung als "unklar" tituliert.

### Beispiel 3:

Statt eines ersten Fluiddrucks und eines zweiten Fluiddrucks kann eine Serie von Fluiddruckwerten ermittelt werden, wobei für verschiedene Einstellungen des Fluidstromventils 7 je ein Fluiddruck des Fluidstroms 3 ermittelt wird. Dadurch kann die ordnungsgemässe Funktionsweise des Fluidstromventils 7 für einen bestimmten oder den gesamten Arbeitsbereich des Fluidstromventils 7 überprüft werden. Bei der Erfassung einer Serie von Fluiddruckwerten kann auf einen Vergleich mit Sollwerten verzichtet werden und nur aus der Zunahme oder Abnahme der Fluiddruckdifferenz zweier benachbarter Fluiddruckwerten auf den ordnungsgemässen Funktionszustand des Fluidstromventils 7 geschlossen werden.

### Beispiel 4:

Das erfindungsgemässe Verfahren kann auch als kurze Unterbrechung des Normalbetriebs erfolgen. Der Normalbetrieb zeichnet sich dadurch aus, dass die Raumbelüftung aufgrund der im Raum oder im Luftabzug des Raums gemessenen Parameter oder einer vom Benutzer vorgegebenen Parameterwahl durch das Fluidstromventil geregelt wird. Das heisst, das Fluidstromventil ist ein zusätzlicher Teil in einem ansonsten bekannten Regelkreis.

Unter dem genannten Regelkreis ist beispielsweise folgendes zu verstehen: Eine Führungsgrösse (z.B. ein vorgegebener Volumenstrom bzw. Luftvolumen pro Zeit) wird einem Regler (z.B. einer elektronischen Regelschaltung, welche den Antriebsmotor der Luftklappe steuert) zugeführt, wobei der Regler eine Stellgrösse (z.B. eine bestimmte Winkelstellung der Lufklappe) ausgibt, um die Regelstrecke (z.B. den Volumenstrom im Lüftungskanal) einzustellen. Die der Führungsgrösse zugeordnete Regelgrösse (z.B. der durch einen Sensor im Lüftungskanal gemessene tatsächliche Volumenstrom) wird zurückgeführt an einen Differenzverstärker, welcher die Führungsgrösse (nämlich den vorgegebenen Volumenstrom) mit der Regelgrösse (nämlich dem gemessenen tatsächlichen Volumenstrom) vergleicht und das resultierende Fehlersignal wieder dem Regler zuführt.

Eine mögliche Ausführungsform besteht nun darin, dass dieser Regelkreis kurzfristig zugunsten einer erfindungsgemässen Funktionsdiagnose unterbrochen wird. Es wird also zu einem bestimmten Zeitpunkt (z.B. aufgrund eines Timers oder aufgrund einer Aktivierung durch die Zentralsteuerung) als Sollposition des Fluidstromventils eine ganz geöffnete (oder geschlossene) Stellung des Ventilkörpers vorgegeben. Danach wird gemessen, ob der Fluidstrom dem erwarteten Wert (maximaler Durchfluss bzw. kein Durchfluss) entspricht. Dieser Vergleich und die Ausgabe eines entsprechenden Funktionsdiagnosewertes werden von dem Auswertemodul durchgeführt. Danach wird wieder der Normalbetrieb aufgenommen, d.h. der Ventilkörper wird in die Position gefahren, in welcher er vor dem Unterbruch des Normalbetriebs war.

Es kann sein, dass das Fluidstromventil normalerweise nur in einem mittleren Bereich (z.B. zwischen 30% und 60% offen) betrieben wird und dort funktioniert, dass es aber gar nicht in eine ganz offene oder ganz geschlossene Stellung fahren kann aufgrund eines Defekts bzw. Mangels. Während der Normalbetrieb eine solche Fehlfunktion nicht sichtbar macht, wird dies mit der erfindungsgemässen Funktionsdiagnose erkennbar. Somit ist es sinnvoll, dass das Fluidstromventil im Rahmen der Erfindung in eine Extremposition gefahren wird, also in eine Position, die im Normalzustand nicht oder nur sehr selten eingenommen wird.

### Beispiel 5:

Die Erfindung lässt sich auch zur Funktionskontrolle von Sicherheitskomponenten einsetzen, wie z.B. einer Brandschutzklappe. Motorische Brandschutzklappen sind bekannt und müssen aufgrund von Sicherheitsvorschriften regelmässig geprüft werden. Normalerweise befinden sie sich in einer Ruhestellung (z.B. der ganz offenen oder geschlossenen Stellung) in welcher sie im Normalbetrieb der HLK-Anlage verharren sollen. Durch eine testweise Aktivierung und die Messung des Fluidstroms lässt sich per Fernwartung eine Funktionsdiagnose durchführen.

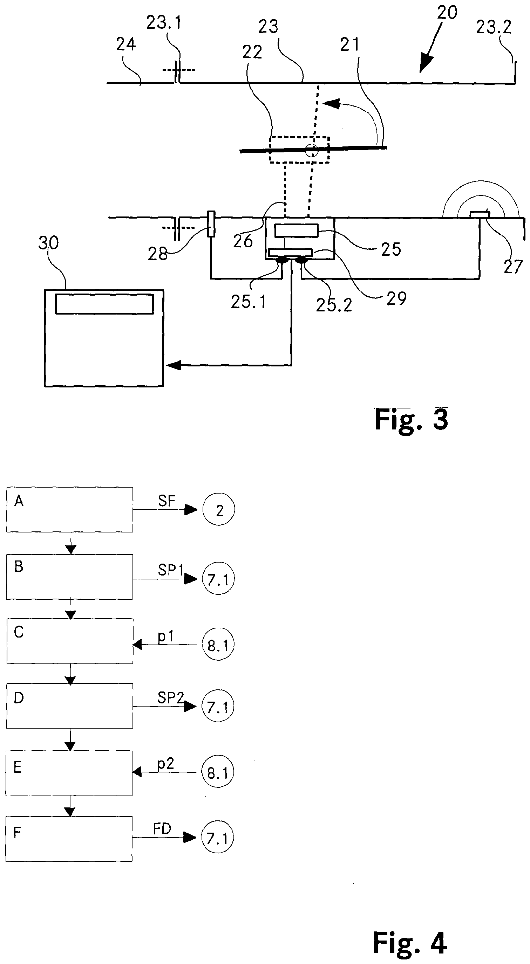

Fig. 3 zeigt die Anwendung der Erfindung auf eine Brandschutzklappenvorrichtung 20. Diese weist eine Klappe 21 auf, welche durch einen (andeutungsweise dargestellten) Motor 22 betätigt wird. Der Motor 22 ist z.B. aussenseitig am Rohrabschnitt 23 auf der Rotationsachse der Klappe 21 angebracht. Der Rohrabschnitt 23 bildet quasi das Gehäuse der Brandschutzvorrichtung 20 und ist über Anschlussflansche 23.1, 23.2 an fortführende Fluidkanalabschnitte 24 der HLK-Analge anschliessbar. Aussen am Rohrabschnitt 23 ist eine Steuerschaltung 25 vorgesehen, welche derart ausgebildet ist, dass sie die erfindungsgemässe Funktionsdiagnose durchführen kann. Die Steuerschaltung 25 ist hier als separates Modul dargestellt, welches über Leitungen 26 mit dem Motor 22 verbunden ist.

Weiter ist im Innenraum des Rohrabschnitts 23 ein elektro/akustischer Wandler 27 (als elektrisch ansteuerbare Schallquelle) und ein Mikrofon 28 (als Schallsensor) vorgesehen. Diese sind auf gegenüberliegenden Seiten der Klappe 21 platziert und über Schnittstellen 25.1, 25.2 mit der Steuerschaltung verbunden. Wenn die Klappe 21 geschlossen ist, befinden sich elektro/akustischer Wandler 27 und Mikrofon 28 in zwei getrennten Raumbereichen.

Im Normalbetrieb ist die Klappe 21 stets in der vollständig offenen Stellung. Im Notfall muss die Klappe 21 aber schliessen (gestrichelte Darstellung). Um nun eine Funktionsdiagnose durchzuführen, wird im Rahmen der Erfindung von der Steuerschaltung 25 ein Steuersignal zum Schliessen der Klappe 21 erzeugt. Danach aktiviert die Steuerschaltung 25 den elektro/akustischen Wandler 27, welcher ein Schallsignal im Rohrabschnitt 23 erzeugt. Über das Mikrofon 28 wird der Schallpegel gemessen und von der Steuerschaltung 25 verarbeitet. Durch die (gestrichelt dargestellte) geschlossene Stellung der Klappe 21 wird der Schallpegel am Ort des Mikrofons 28 gedämpft. Ist die Dämpfung bei geschlossener Klappe 21 geringer als ein abgespeicherter Grenzwert, ist davon auszugehen, dass die Klappe 21 ungenügend schliesst. Deshalb gibt die Funktionsdiagnose als Resultat den Zustand "fehlerhaft" aus. Dieser Diagnosewert wird z.B. an den Rechner 29 einer Wartungszentrale 30 übermittelt.

Fig. 2 zeigt eine HLK Anlage mit einem Fluidstromkanalsystem 11, welches zur Klimatisierung von mehreren Räumen 12.1, 12.2, 12.3 eingerichtet ist. Dazu wird von einem Fluidstromantrieb 2 in einem Fluidstromkanal 1.0 ein Fluidstrom 3 erzeugt. Der Fluidstromkanal 1.0 und somit der Fluidstrom 3.0 verzweigt auf mehrere Fluidstromkanäle 1.1, 1.2, 1.3, in welchen somit je ein Fluidstrom 3.1, 3.2, 3.3 geführt ist. In den Fluidstromkanälen 1.1, 1.2, 1.3 ist je ein Fluidstromsensor 8.1, 8.2, 8.3 und je ein Fluidstromventil 7.1, 7.2, 7.3 angeordnet. Der Fluidstromantrieb 2, die Fluidstromventile 7.1, 7.2, 7.3 und die Fluidstromsensoren 8.1, 8.2, 8.3 sind signalmässig mit einer Steuerschaltung 10 verbunden, welche Steuermodule umfasst, um den Fluidstromantrieb 2 und die Fluidstromventile 7.1, 7.2, 7.3 anzusteuern sowie Erfassungsmodule umfasst, um Messdaten der Fluidstromsensoren 8.1, 8.2, 8.3 zu erfassen. Zur Erfassung von Raumklimadaten sind Raumsensoren 13.1, 13.2, 13.3 vorgesehen, welche beispielsweise eine Temperatur, eine Luftfeuchtigkeit, eine Raumdruck oder irgendwelche andere Raumklimadaten erfassen.

Der Ablauf ist folgender (Fig. 4):
A: Zur automatisierten Funktionskontrolle der Fluidstromventile 7.1, 7.2, 7.3 wird durch die Steuerschaltung 10 ein Steuersignal SF erzeugt, um den Fluidstromantrieb 2 auf eine bestimmte Leistung einzustellen und einen Fluidstrom 3.0 zu erstellen.
B: Dann erzeugt die Steuerschaltung 10 ein Steuersignal SP1, um ein erstes Fluidstromventil 7.1 auf eine erste Sollposition einzustellen und die verbleibenden Fluidstromventil 7.2, 7.3 vollständig zu schliessen.
C: Mit dem ersten Fluidstromsensor 8.1 wird der Fluiddruck p1 erfasst und in der Auswerteeinheit 9 abgespeichert.
D: Anschliessend wird an das Fluidstromventil 7.1 ein Steuersignal für eine zweite Sollposition abgegeben und das entsprechende Sensorsignal erfasst.
E: Wiederum wird mit dem ersten Fluidstromsensor 8.1 ein Fluiddruck p2 erfasst und in der Auswerteeinheit 9 abgespeichert.
F: Aus der Fluiddruckmessung mit dem ersten Fluidstromsensor 8.1 wird überprüft, ob die Druckdifferenz innerhalb der Toleranz von z. B. 10% zu einem Sollwert liegt, welcher der Verstellung des ersten Fluidstromventils 7.1 entspricht. Falls dies der Fall ist, wird durch die Auswerteeinheit 9 signalisiert, dass der Funktionszustand des ersten Fluidstromverntil 7.1 ordnungsgemäss ist (Funktionsdiagnose FD). Zur Funktionskontrolle der weiteren Fluidstromventile 7.2, 7.3 wird in analoger Weise verfahren.

Der Fluidstrom 3 kann auch ein Wasserstrom mit vorgebbaren Parametern wie der Temperatur, der Fliessgeschwindigkeit, dem Druck oder irgendeinem anderen Parameter sein.

Zusammenfassend ist festzustellen, dass ein Verfahren und System beschrieben wurden, welche eine effiziente Funktionskontrolle einer HLK Anlage ermöglichen. Die Funktionskontrolle erfolgt vollkommen automatisiert und ist deshalb häufig sowie kostengünstig durchführbar.

## Patentansprüche

1. Verfahren zur automatisierten Funktionskontrolle einer HLK Anlage (HLK: Heizung, Lüftung, Klima), welche
a) einen Fluidstromkanal (1),
b) ein in diesem angeordnetes Fluidstromventil (7), welches einen Ventilkörper (5) im Fluidstromkanal (1) und einen den Ventilkörper (5) bewegenden Ventilmotor (15) aufweist,
c) eine Steuerschaltung zur Betätigung des Ventilmotors,
d) einen Sensor (8; 28) im Fluidstromkanal (1; 20) und
e) ein Auswertemodul zur Auswertung von Signalen des Sensors umfasst,
mit folgenden Schritten:
f) Vorgeben eines ersten Stellsignals durch die Steuerschaltung an den Ventilmotor, wobei das Stellsignal einer ersten Sollposition des Ventilkörpers (5) entspricht,
g) Registrieren eines ersten Signals des Sensors durch das Auswertemodul,
h) Ermitteln einer Funktionsdiagnose des Fluidstromventils auf Basis des ersten Signals des Sensors,
**dadurch gekennzeichnet, dass**
die erste Sollposition eine geschlossene Stellung des Ventilkörpers (5, 21) ist.

2. Verfahren nach Anspruch 1, **dadurch gekennzeichnet, dass** die Funktionsdiagnose als mögliches Ergebnis mindestens zwei, vorzugsweise nicht mehr als drei Zustände ermittelt.

3. Verfahren nach Anspruch 1 oder 2, **dadurch gekennzeichnet, dass** die Funktionsdiagnose an eine zur Überwachung mehrerer Fluidstromventile ausgelegte Zentraleinheit übermittelt wird.

4. Verfahren nach einem der Ansprüche 1 bis 3, **dadurch gekennzeichnet, dass** vorgängig zum Registrieren des ersten Signals des Sensors (8) ein Fluidstrom (3) im Fluidstromkanal (1) der HLK Anlage bereitgestellt wird und dass der Sensor (8) zum Messen eines Fluidstromparameters des Fluidstroms (3), insbesondere eines Fluiddrucks, einer Fluidgeschwindigkeit oder eines Fluidvolumens, ausgebildet ist.

5. Verfahren nach einem der Ansprüche 1 bis 4, **dadurch gekennzeichnet, dass** der Sensor (28) zum Messen eines akustischen Signals ausgebildet ist.

6. Verfahren nach einem der Ansprüche 1 bis 5, **dadurch gekennzeichnet, dass** vor dem Vorgeben der ersten Stellsignals oder nach dem Registrieren des ersten Signals des Sensors folgende Schritte durchgeführt werden:
a) Vorgeben eines zweiten, vom ersten Stellsignal verschiedenen Stellsignals durch die Steuerschaltung an den Ventilmotor, wobei das zweite Stellsignal einer zweiten Sollposition des Fluidstromventils (5) entspricht,
b) Registrieren eines zweiten Signals des Sensors,
c) Ermitteln der Funktionsdiagnose des Fluidstromventils auf Basis des ersten und des zweiten Signals des Sensors durch das Auswertungsmodul (9).

7. Verfahren nach einem der Ansprüche 1 bis 6, **dadurch gekennzeichnet, dass** das Ermitteln der Funktionsdiagnose derart erfolgt, dass als Funktionszustand die ordnungsgemässe Dichtigkeit eines Fluidstromkanals (1) ermittelt wird.

8. Verfahren nach einem der Ansprüche 1 bis 6, **dadurch gekennzeichnet, dass** das Fluidstromventil eine Brandschutzklappe ist und dass das Ermitteln der Funktionsdiagnose derart erfolgt, dass das dichte Schliessen der Brandschutzklappe ermittelt wird.

9. Fluidstromventil (20), insbesondere Brandschutzklappenvorrichtung zum Einbau in einen Fluidstromkanal (23) einer HLK-Anlage, umfassend
a) einen Ventilkörper (21), welcher im Fluidstromkanal (23) angeordnet werden kann,
b) einen den Ventilkörper (21) bewegenden Ventilmotor (22) zur Betätigung des Fluidstromventils (20),
c) eine Steuerschaltung (25) zur Steuerung des Ventilmotors (22),
d) eine Schnittstelle zu einem Sensor (28), welcher im Fluidstromkanal (23) angeordnet werden kann,
e) ein Auswertemodul (29) zur Auswertung von Signalen des Sensors (28),
f) wobei die Steuerschaltung (25) zum Vorgeben eines ersten Stellsignals an den Ventilmotor ausgebildet ist, wobei das Stellsignal einer ersten Sollposition des Ventilkörpers (21) entspricht,
g) wobei das Auswertemodul zum Registrieren eines ersten Signals des Sensors und zum Berechnen einer Funktionsdiagnose des Fluidstromventils (20) auf Basis des ersten Signals des Sensors (28) ausgebildet ist
**dadurch gekennzeichnet, dass**
die erste Sollposition eine geschlossene Stellung des Ventilkörpers (5, 21) ist.

10. Fluidstromventil (20) nach Anspruch 9 **dadurch gekennzeichnet, dass** sie als Sensor ein Mikrofon (28) umfasst und dass sie einen elektro/akustischen Wandler (27) zur Erzeugung von Schallsignalen umfasst.

11. Fluidstromventil (20) nach Anspruch 9 oder 10, **dadurch gekennzeichnet, dass** die Steuerschaltung zum Vorgeben eines zweiten, vom ersten Stellsignal verschiedenen Stellsignals an den Ventilmotor ausgebildet ist, wobei das Stellsignal einer zweiten Sollposition des Fluidstromventils (5) entspricht, und dass das Auswertemodul bei der Ermittlung der Funktionsdiagnose ein vom Sensor registriertes zweites Signal berücksichtigt.

12. System zur automatisierten Funktionskontrolle einer HLK-Anlage mit einem Fluidstromventil nach einem der Ansprüche 9 bis 11, welcher in einem Fluidstromkanal (1; 23) angeordneten ist, umfassend
a) einen Fluidstromantrieb (2) zum Bereitstellen eines Fluidstroms (3) in dem Fluidstromkanal (1) und
b) einen Fluidstromsensor (28) zur Erfassung von Signalen betreffend einen Fluidstromparameter des Fluidstroms (3) im Fluidstromkanal (1; 23), wobei die Signale insbesondere einen Fluiddruck, eine Fluidgeschwindigkeit und/oder ein Fluidvolumen des Fluidstroms (3) im Fluidstromkanal (1) betreffen.

13. System nach Anspruch 12, **dadurch gekennzeichnet, dass** der Fluidstromsensor (28) zum Erfassen eines akustischen Signals ausgebildet ist.

14. System nach einem der Ansprüche 12 oder 13, **dadurch gekennzeichnet, dass** das Auswertemodul (9) einen Speicher zum Abspeichern von Referenzdaten aufweist, wobei das Auswertemodul (9) derart ausgebildet ist, dass aufgrund eines Vergleichs des Signals des Sensors mit den Referenzdaten die Funktionsdiagnose ermittelt wird.

15. System nach einem der Ansprüche 12 bis 14, **dadurch gekennzeichnet, dass** das Auswertemodul (9) derart ausgebildet ist, dass aufgrund des Signals des Sensors als Funktionsdiagnose der HLK Anlage das ordnungsgemässe Verstellen des Fluidstromventils (5) und/oder die ordnungsgemässe Dichtigkeit einer Fluidstromkanals (1) ermittelt wird.

## Claims

1. Method for automated functional monitoring of an HVAC (heating, ventilation and air-conditioning) system which comprises
a) a fluid flow duct (1),
b) a fluid flow valve (7) which is arranged therein and has a valve body (5) in the fluid flow duct (1) and a valve motor (15) which moves the valve body (5),
c) a control circuit for actuating the valve motor,
d) a sensor (8; 28) in the fluid flow duct (1; 20) and
e) an evaluation module for evaluating signals of the sensor,
having the following steps:
f) predefining a first actuation signal to the valve motor by means of the control circuit, wherein the actuation signal corresponds to a first setpoint position of the valve body (5),
g) registering a first signal of the sensor by means of the evaluation module, and
h) determining a functional diagnosis of the fluid flow valve on the basis of the first signal of the sensor,
**characterized in that**
the first setpoint position is a closed position of the valve body (5, 21).

2. Method according to Claim 1, **characterized in that** the functional diagnosis is determined as the possible result of at least two, preferably not more than three, states.

3. Method according to Claim 1 or 2, **characterized in that** the functional diagnosis is transmitted to a central unit which is configured to monitor a plurality of fluid flow valves.

4. Method according to one of Claims 1 to 3, **characterized in that**, prior to the registration of the first signal of the sensor (8), a fluid flow (3) is made available in the fluid flow duct (1) of the HVAC system, and **in that** the sensor (8) is designed to measure a fluid flow parameter of the fluid flow (3), in particular a fluid pressure, a fluid speed or a fluid volume.

5. Method according to one of Claims 1 to 4, **characterized in that** the sensor (28) is designed to measure an audible signal.

6. Method according to one of Claims 1 to 5, **characterized in that**, before the first actuation signal is predefined or after the registration of the first signal of the sensor, the following steps are carried out:
a) predefining a second actuation signal, different from the first actuation signal, to the valve motor by means of the control circuit, wherein the second actuation signal corresponds to a second setpoint position of the fluid flow valve (5),
b) registering a second signal of the sensor, and
c) determining the functional diagnosis of the fluid flow valve on the basis of the first and the second signals of the sensor by means of the evaluation module (9).

7. Method according to one of Claims 1 to 6, **characterized in that** the functional diagnosis is determined in such a way that the satisfactory seal of a fluid flow duct (1) is determined as a functional state.

8. Method according to one of Claims 1 to 6, **characterized in that** the fluid flow valve is a fire damper, and **in that** functional diagnosis is determined in such a way that the sealed closing of the fire damper is determined.

9. Fluid flow duct (20), in particular fire damper device, for installation in a fluid flow duct (23) of an HVAC system, comprising
a) a valve body (21) which can be arranged in the fluid flow duct (23),
b) a valve motor (22) which moves the valve body (21) and has the purpose of actuating the fluid flow valve (20),
c) a control circuit (25) for controlling the valve motor (22),
d) an interface with a sensor (28) which can be arranged in the fluid flow duct (23),
e) an evaluation module (29) for evaluating signals of the sensor (28),
f) wherein the control circuit (25) is designed to predefine a first actuation signal to the valve motor, wherein the actuation signal corresponds to a first setpoint position of the valve body (21),
g) wherein the evaluation module is designed to register a first signal of the sensor and to calculate a functional diagnosis of the fluid flow duct (20) on the basis of the first signal of the sensor (28),
**characterized in that**
the first setpoint position is a closed position of the valve body (5, 21).

10. Fluid flow valve (20) according to Claim 9, **characterized in that** it comprises a microphone (28) as a sensor, and **in that** it comprises an electro-acoustic transducer (27) for generating sound signals.

11. Fluid flow valve (20) according to Claim 9 or 10, **characterized in that** the control signal is designed to predefine a second actuation signal, different from the first actuation signal, to the valve motor, wherein the actuation signal corresponds to a second setpoint position of the fluid flow valve (5), and **in that**, during the determination of the functional diagnosis, the evaluation module takes into account a second signal which is registered by the sensor.

12. System for automated functional monitoring of an HVAC system having a fluid flow valve according to one of Claims 9 to 11 which is arranged in a fluid flow duct (1; 23), comprising:
a) a fluid flow drive (2) for making available a fluid flow (3) in the fluid flow duct (1), and
b) a fluid flow sensor (8) for sensing signals relating to a fluid flow parameter of the fluid flow (3) in the fluid flow duct (1; 23), wherein the signals relate, in particular, to a fluid pressure, a fluid speed and/or a fluid volume of the fluid flow (3) in the fluid flow duct (1).

13. System according to Claim 12, **characterized in that** the fluid flow sensor (28) is designed to sense an audible signal.

14. System according to either of Claims 12 and 13, **characterized in that** the evaluation module (9) has a memory for storing reference data, wherein the evaluation module (9) is embodied in such a way that the functional diagnosis is determined on the basis of a comparison of the signal of the sensor with the reference data.

15. System according to one of Claims 12 to 14, **characterized in that** the evaluation module (9) is designed in such a way that the satisfactory adjustment of the fluid flow valve (5) and/or the satisfactory seal of a fluid flow duct (1) are determined on the basis of the signal of the sensor as a functional diagnosis of the HVAC system.

## Revendications

1. Procédé de contrôle automatisé du fonctionnement d'une installation de CVC (CVC : Chauffage, Ventilation, Climatisation), laquelle comprend :
a) un canal d'écoulement de fluide (1),
b) une vanne d'écoulement de fluide (7) disposée dans celui-ci, laquelle possède un corps de vanne (5) dans le canal d'écoulement de fluide (1) et un moteur de vanne (15) qui déplace le corps de vanne (5),
c) un circuit de commande servant à actionner le moteur de vanne,
d) un capteur (8 ; 28) dans le canal d'écoulement de fluide (1 ; 20) et
e) un module d'interprétation destiné à interpréter des signaux du capteur,
comprenant les étapes suivantes :
f) fourniture d'un premier signal de commande par le circuit de commande au moteur de vanne, le signal de commande correspondant à une première position de consigne du corps de vanne (5),
g) enregistrement d'un premier signal du capteur par le module d'interprétation,
h) détermination d'un diagnostic de fonctionnement de la vanne d'écoulement de fluide sur la base du premier signal du capteur,
**caractérisé en ce que**
la première position de consigne est une position fermée du corps de vanne (5, 21).

2. Procédé selon la revendication 1, **caractérisé en ce que** le diagnostic de fonctionnement détermine en tant que résultat possible au moins deux, de préférence pas plus de trois états.

3. Procédé selon la revendication 1 ou 2, **caractérisé en ce que** le diagnostic de fonctionnement est communiqué à une unité centrale conçue pour la surveillance de plusieurs vannes d'écoulement de fluide.

4. Procédé selon l'une des revendications 1 à 3, **caractérisé en ce que** préalablement à l'enregistrement du premier signal du capteur (8), un courant de fluide (3) est fourni dans le canal d'écoulement de fluide (1) de l'installation de CVC et **en ce que** le capteur (8) est configuré pour mesurer un paramètre d'écoulement de fluide du courant de fluide (3), notamment une pression de fluide, une vitesse de fluide ou un volume de fluide.

5. Procédé selon l'une des revendications 1 à 4, **caractérisé en ce que** le capteur (28) est configuré pour mesurer un signal acoustique.

6. Procédé selon l'une des revendications 1 à 5, **caractérisé en ce que** les étapes suivantes sont exécutées avant la fourniture du premier signal de commande ou après l'enregistrement du premier signal du capteur :
a) fourniture d'un deuxième signal de commande, différent du premier signal de commande, par le circuit de commande au moteur de vanne, le deuxième signal de commande correspondant à une deuxième position de consigne de la vanne d'écoulement de fluide (5),
b) enregistrement d'un deuxième signal du capteur,
c) détermination du diagnostic de fonctionnement de la vanne d'écoulement de fluide sur la base du premier et du deuxième signal du capteur par le module d'interprétation (9).

7. Procédé selon l'une des revendications 1 à 6, **caractérisé en ce que** la détermination du diagnostic de fonctionnement est effectuée de telle sorte que l'état de fonctionnement déterminé est l'étanchéité correcte d'un canal d'écoulement de fluide (1).

8. Procédé selon l'une des revendications 1 à 6, **caractérisé en ce que** la vanne d'écoulement de fluide est un clapet coupe-feu et **en ce que** la détermination du diagnostic de fonctionnement est effectuée de telle sorte que la fermeture étanche du clapet coupe-feu est déterminée.

9. Vanne d'écoulement de fluide (20), notamment dispositif de clapet coupe-feu destiné à être installé dans un canal d'écoulement de fluide (23) d'une installation de CVC, comprenant
a) un corps de vanne (21) qui peut être disposé dans le canal d'écoulement de fluide (23),
b) un moteur de vanne (22) qui déplace le corps de vanne (21), destiné à actionner la vanne d'écoulement de fluide (20),
c) un circuit de commande (25) destiné à commander le moteur de vanne (22),
d) une interface avec un capteur (28) qui peut être disposé dans le canal d'écoulement de fluide (23),
e) un module d'interprétation (29) destiné à interpréter des signaux du capteur (28),
f) le circuit de commande (25) étant configuré pour fournir un premier signal de commande au moteur de vanne, le signal de commande correspondant à une première position de consigne du corps de vanne (21),
g) le module d'interprétation étant configuré pour enregistrer un premier signal du capteur et pour calculer un diagnostic de fonctionnement de la vanne d'écoulement de fluide (20) sur la base du premier signal du capteur (28),
**caractérisée en ce que**
la première position de consigne est une position fermée du corps de vanne (5, 21).

10. Vanne d'écoulement de fluide (20) selon la revendication 9, **caractérisée en ce qu'**elle comporte un microphone (28) en tant que capteur et **en ce qu'**elle comporte un convertisseur électroacoustique (27) destiné à générer des signaux sonores.

11. Vanne d'écoulement de fluide (20) selon la revendication 9 ou 10, **caractérisée en ce que** le circuit de commande est configuré pour fournir un deuxième signal de commande, différent du premier signal de commande, au moteur de vanne, le signal de commande correspondant à une deuxième position de consigne de la vanne d'écoulement de fluide (5), et **en ce que** le module d'interprétation tient compte d'un deuxième signal enregistré par le capteur lors de la détermination du diagnostic de fonctionnement.

12. Système de contrôle automatisé du fonctionnement d'une installation de CVC comprenant une vanne d'écoulement de fluide selon l'une des revendications 9 à 11, laquelle est disposée dans un canal d'écoulement de fluide (1 ; 23), comprenant
a) un mécanisme d'entraînement d'écoulement de fluide (2) destiné à fournir un courant de fluide (3) dans le canal d'écoulement de fluide (1) et
b) un capteur d'écoulement de fluide (28) destiné à acquérir des signaux concernant un paramètre d'écoulement de fluide du courant de fluide (3) dans le canal d'écoulement de fluide (1 ; 23), les signaux concernant notamment une pression de fluide, une vitesse de fluide et/ou un volume de fluide du courant de fluide (3) dans le canal d'écoulement de fluide (1).

13. Système selon la revendication 12, **caractérisé en ce que** le capteur d'écoulement de fluide (28) est configuré pour acquérir un signal acoustique.

14. Système selon l'une des revendications 12 ou 13, **caractérisé en ce que** le module d'interprétation (9) possède une mémoire destinée à mémoriser des données de référence, le module d'interprétation (9) étant configuré de telle sorte que le diagnostic de fonctionnement est déterminé sur la base d'une comparaison du signal du capteur avec les données de référence.

15. Système selon l'une des revendications 12 à 14, **caractérisé en ce que** le module d'interprétation (9) est configuré de telle sorte que le positionnement correct de la vanne d'écoulement de fluide (5) et/ou l'étanchéité correcte d'un canal d'écoulement de fluide (1) est déterminé sur la base du signal du capteur en tant que diagnostic de fonctionnement de l'installation de CVC.
